# EUROPEAN PATENT APPLICATION

(11) **EP 3 144 532 A1**
(43) Date of publication of application: **22.03.2017**
(21) Application number: 15776220.4
(22) Date of filing: 05.04.2015
(51) Int. Cl.: F04C 2/40

(54) **ECCENTRIC MOVABLE VANE PUMP**

(30) Priority: 09.04.2014 CN 201420169067 U; 08.05.2014 CN 201420233783 U; 18.10.2014 CN 201420605560 U; 08.12.2014 CN 201420773442 U
(71) Applicant: Tang, Bin, Zibo, Shandong 256400 (CN)
(72) Inventor: Tang, Bin, Zibo, Shandong 256400 (CN)
(74) Representative: Meyer-Dulheuer, Karl-Hermann
(86) International application number: PCT/CN2015/075934
(87) International publication number: WO 2015/154645

(57) **Abstract**

An eccentric movable vane pump, including a cylinder body (1), a first rotor (2), second rotors (4), and movable vanes (21). The first rotor (2) is eccentrically disposed with the second rotors (4). The number of the movable vanes (21) is greater than or equal to 2. One end of each of the movable vanes (21) is rotatably connected to the first rotor (2), and the other ends of the movable vanes (21) are rotatably connected to the second rotors (4). The first rotor (2) is disposed on a main shaft (11). The cylinder body (1) is provided with a fluid inlet (61) and a fluid outlet (62) respectively corresponding to an expansion area and a compression area of a space between adjacent movable vanes (21). The pump has advantages of a simple structure, high efficiency, low cost, multiple operation conditions, high stability, and a long service life, can operate in a high-speed range and an ultra-high speed range without being sealed by an elastic device, and has a small radial impact in operation.

## Description

### BACKGROUND OF THE INVENTION

### 1. Field of the Invention

The present invention relates to an eccentric movable vane pump; in particular, to a variable-displacement eccentric movable vane pump, which is applicable to fields of vacuum pumps, compressor pumps, water pumps, automobile turbochargers, internal combustion engines of gas turbines, wind turbines, hydraulic engines, steam turbine pumps, propellers, stepless hydraulic couplers, and the like.

### 2. Description of Related Art

Current variable-displacement pumps mainly include a piston pump and a sliding vane pump. Both of the piston pump and the sliding vane pump use a principle of friction sealing, resulting in rapid wearing of a friction plate, a poor sealing effect, a short service life, and low efficiency, but a high requirement on processing precision. When a friction plate operates at a high speed, due to impacts of operation conditions such as an elastic force of a spring, a frequency, a pressure of a working fluid, and a pressure difference, production efficiency of a device is substantially fluctuated. Therefore, the friction plate has a narrow operating range, and cannot be used in high-requirement operation conditions such as high speed, high pressure, and large flow. Meanwhile, such a variable-displacement pump has a low effective displacement rate.

A centrifugal pump drives high-speed rotation of a liquid working medium by means of an impeller, so as to transfer mechanical energy to the delivered liquid working medium. A displacement pump sucks and discharges a liquid by means of periodic increases and decreases in displacement caused by movements of working parts, and directly increases pressure energy of the liquid by means of extrusion of the working parts. A jet pump uses a high-speed jet flow produced by a working fluid to eject a liquid, and subsequently increases energy of the ejected liquid through momentum exchange.

Both of the centrifugal pump and the jet pump involve velocity-type open energy exchange, and the displacement pump involves displacement-type closed energy exchange. With the same power density ratio, due to different operation modes, these three types of machines have energy utilization descending from the displacement pump, to the centrifugal pump, and to the jet pump.

Energy utilization of a pump in operation depends on factors such as mechanical energy transfer loss, friction loss of a working liquid, and leakage of the working liquid. Currently, a highly efficient pump is of expensive materials, an extremely complex structure, and a huge size.

A conventional displacement pump (a plunger pump and a pneumatic diaphragm pump) changes a piston-type displacement by means of a crank connecting rod mechanism. The displacement pump can effectively solve a problem of leakage of a working liquid by means of a size of a gap between mechanical parts and addition of a seal member. The optimized efficiency of the displacement pump can reach at least 90%. However, due to limitations of a slider structure of the crank connecting rod of the conventional displacement pump, as compared with the centrifugal pump, the costs for the displacement pump to achieve operation efficiency in a wide range of head and a wide range of flow are the same as the costs for the centrifugal pump to achieve high efficiency, which are expensive materials, an extremely complex mechanical structure, and a huge machine size.

### SUMMARY OF THE INVENTION

With an eccentric movable vane pump of the present invention, leakage of a working medium can be easily controlled, and operation efficiency in a wide range of head and a wide range of flow can be achieved like the centrifugal pump. In addition, the pump has a high mechanical power density ratio, a simple structure, high efficiency, low cost, multiple operation conditions, high stability, and a long service life, can operate in a high-speed range and an ultra-high speed range without being sealed by an elastic device, and has a small radial impact in operation. The eccentric movable vane pump of the present invention is applicable to fields of vacuum pumps, compressor pumps, water pumps, automobile turbochargers, internal combustion engines of gas turbines, wind turbines, hydraulic engines, steam turbine pumps, propellers, stepless hydraulic couplers, and the like.

The technical solution of the present invention is to: provide an eccentric movable vane pump, including: a cylinder body, a first rotor, second rotors, and movable vanes, where the first rotor is eccentrically disposed with the second rotors; one end of each of the movable vanes is rotatably connected to the first rotor; the second rotors correspond one-to-one to the movable vanes, and the number of the second rotors and the number of the movable vanes are greater than or equal to two; the other ends of the movable vanes are rotatably connected to the second rotors; the first rotor is disposed on a main shaft; and the cylinder body is provided with a fluid inlet and a fluid outlet respectively corresponding to an expansion area and a compression area of a space between adjacent movable vanes.

As an improvement of the present invention, the second rotors are respectively provided with fixed vanes, and a volume of a space between adjacent fixed vanes is periodically compressed and expanded, such that the fixed vanes and components of the cylinder body form a displacement pump.

As an improvement of the present invention, each fixed vane and the corresponding connected second rotor are connected by means of a fixed-transmission-ratio mechanism, so as to change from a state that a rotation speed of the fixed vane undergoes one change of quick-slow conversion during one revolution of the fixed vane to a state that the fixed vane undergoes a plurality of periodic changes of quick-slow conversion during one revolution of the fixed vane, such that the fixed vane undergoes a plurality of compression and expansion processes during one revolution of the fixed vane in the cylinder body, and the fixed vane completes a power cycle of a gas with four strokes during one revolution of the fixed vane.

As an improvement of the present invention, in a rotation operation process of a space between adjacent movable vanes and the cylinder body, and in a process that the space gets close to a maximum volume and gradually decreases from the maximum volume, a composite gas passage is disposed on the cylinder body corresponding to the space, and the composite gas passage is formed by the fluid outlet and the fluid inlet, which is applicable to a two-stroke engine.

As an improvement of the present invention, in a rotation operation process of a space between adjacent fixed vanes and the cylinder body, and in a process that the space gets close to a maximum volume and gradually decreases from the maximum volume, a composite gas passage is disposed on the cylinder body corresponding to the space, and the composite gas passage is formed by the fluid outlet and the fluid inlet, which is applicable to a two-stroke engine.

As an improvement of the present invention, in a rotation process of a space between adjacent movable vanes, a valve mechanism is disposed on the cylinder body corresponding to a volume expansion area and a volume compression area of the space, and the valve mechanism is closed when a gas in the space is compressed and expanded and is opened when the space sucks a gas and discharges a gas, which is applicable to a four-stroke engine.

As an improvement of the present invention, two side surfaces of each of the movable vanes are curved surfaces, where one side surface overlaps a wall surface of the first rotor, and the other side surface overlaps a wall surface of a second rotor.

As an improvement of the present invention, a rotatable connection manner between the movable vanes and the first rotor and between the movable vanes and the second rotors is a shaft hole-type connection manner or a flexible connection manner.

As an improvement of the present invention, when the number of the second rotors is greater than or equal to two, the second rotors are further provided with arc-shaped skirts, and the arc-shaped skirts on the second rotors rotatably connected to adjacent movable vanes are nested with each other, and a displacement space between the adjacent movable vanes is separated from a gap between the adjacent second rotors by means of the nested arc-shaped skirts.

As an improvement of the present invention, the first rotor is provided with a rotor fluid inlet and a rotor fluid outlet respectively corresponding to an upper portion and a lower portion of an annular wall surface between adjacent movable vanes; the cylinder body fluid inlet and the cylinder body fluid outlet are disposed at an upper portion and a lower portion of the cylinder body corresponding to the rotor fluid inlet and the rotor fluid outlet; and when the rotor fluid inlet and the cylinder body fluid inlet are in communication with each other or the rotor fluid outlet and the cylinder body fluid outlet are in communication with each other, a fluid enters or is discharged from the displacement space between the adjacent movable vanes.

As an improvement of the present invention, the rotor fluid inlet and the rotor fluid outlet are provided with controlled valves, and the controlled valves are controlled by one of a fluid pressure difference, a centrifugal force, a power, a magnetic force, and an elastic force, or a resultant force of at least two of the forgoing forces.

As an improvement of the present invention, a low-pressure fluid enters the displacement space through the cylinder body fluid inlet, and the low-pressure fluid is pressurized in the displacement space and is subsequently discharged through the cylinder body fluid outlet, such that a pressurization pump is formed; a high-pressure fluid enters the displacement space through the cylinder body fluid inlet, and the high-pressure fluid releases the pressure in the displacement space and is subsequently discharged through the cylinder body fluid outlet, such that a depressurization pump is formed; or a low-pressure fluid enters the displacement space through the rotor fluid inlet, and the low-pressure fluid is pressurized in the displacement space and is subsequently discharged through the rotor fluid outlet, such that a pressurization pump is formed; and a high-pressure fluid enters the displacement space through the rotor fluid inlet, and the high-pressure fluid releases the pressure in the displacement space and is subsequently discharged through the rotor fluid outlet, such that a depressurization pump is formed.

As an improvement of the present invention, the cylinder body is further provided with a control mechanism, and the control mechanism changes a positional relationship between the cylinder body fluid inlet and the cylinder body fluid outlet and thus adjusts shapes and sizes of the cylinder body fluid inlet and the cylinder body fluid outlet; or the control mechanism may change opening and closing conditions of each of the controlled valves, for example, starting positions for opening and closing the controlled valve, so as to change a volume of a fluid entering the displacement space or discharged from the displacement space during one revolution of the eccentric movable vane pump.

As an improvement of the present invention, when the fluid is a liquid, two eccentric movable vane pumps are provided, one of which is a pressurization pump and the other is a depressurization pump, the fluid sequentially flows through the pressurization pump and the depressurization pump, and the control mechanism functions to change volumes of the fluid entering the pressurization pump and the depressurization pump during one revolution of the pressurization pump and the depressurization pump, so as to change a speed difference between the pressurization pump and the depressurization pump, and therefore, the structure can be used as a hydraulic torque converter or a continuously variable transmission; and when the fluid is a gas, one pressurization pump, one depressurization pump, and a heat exchange chamber are provided, the pressurization pump and the depressurization pump are coaxially and fixedly connected, the fluid sequentially flows through the pressurization pump, the heat exchange chamber, and the depressurization pump, and therefore, the structure can be used as a turbocharger, an internal combustion engine, a gas turbine, or an external combustion engine.

As an improvement of the present invention, the first rotor is provided with a rotor fluid passage corresponding to an annular wall surface between adjacent movable vanes.

As an improvement of the present invention, the rotor fluid passage is provided with a valve, and the valve is controlled by one of a fluid pressure difference, a centrifugal force, a power, a magnetic force, and an elastic force, or a resultant force of at least two of the forgoing forces.

As an improvement of the present invention, a track mechanism is formed by two annular guide tracks with different diameters, and the two annular guide tracks are connected by means of a cross track to form a closed loop. A rotor or a slider disposed on the valve acts on the track mechanism, and the rotor or the slider acting on the tracks of different diameters of the track mechanism corresponds to an opened or closed state of the valve.

As an improvement of the present invention, a rotation mechanism capable of rotating the track mechanism is provided, and rotation of the track mechanism can change a relative positional relationship between the track mechanism and the first rotor.

As an improvement of the present invention, a position of the eccentric shaft on the cylinder body is controlled by an eccentric shaft control mechanism, and the eccentric shaft control mechanism can change the position of the eccentric shaft on the cylinder body, so as to change an eccentricity between the first rotor and each of the second rotors.

As an improvement of the present invention, the eccentric shaft control mechanism is formed by a control shaft, the control shaft is eccentrically disposed on the eccentric shaft and is eccentrically disposed with the first rotor, and the control shaft is rotatably disposed on the cylinder body.

As an improvement of the present invention, a main area of the cylinder body fluid inlet is located at an area of the cylinder body corresponding to a state that a space between adjacent movable vanes is in an expanded phase and a volume of the space is relatively large.

As an improvement of the present invention, a main area of the cylinder body fluid outlet is located at an area of the cylinder body corresponding to a state that a space between adjacent movable vanes is in a compressed phase and a volume of the space is relatively large.

The present invention further provides an eccentric movable vane pump, including: a cylinder body, a first rotor, second rotors, and movable vanes, where the first rotor is eccentrically disposed with the second rotors; one end of each of the movable vanes is rotatably connected to the first rotor; the other end of each of the movable vanes is provided with a push rod, and the push rods slide in slides disposed on the second rotors; the number of the removable vanes is greater than or equal to two; and the cylinder body is provided with a fluid inlet and a fluid outlet respectively corresponding to an expansion area and a compression area of a space between adjacent movable vanes.

As an improvement of the present invention, the second rotors are respectively provided with fixed vanes, and a volume of a space between adjacent fixed vanes is periodically compressed and expanded, such that the fixed vanes and components of the cylinder body form a displacement pump.
The present invention has advantages of a simple structure, high efficiency, low cost, multiple operation conditions, high stability, and a long service life, can operate in a high-speed range and an ultra-high speed range without being sealed by an elastic device, and has a small radial impact in operation. The eccentric movable vane pump of the present invention is applicable to fields of vacuum pumps, compressor pumps, water pumps, automobile turbochargers, internal combustion engines of gas turbines, wind turbines, hydraulic engines, steam turbine pumps, propellers, stepless hydraulic couplers, and the like.

### BRIEF DESCRIPTION OF THE DRAWINGS

Fig. 1 is a schematic diagram of a second rotor with slides according to the present invention;
Fig. 2 is a schematic structural diagram of a movable vane in Fig. 1;
Fig. 3 is a schematic structural diagram showing that the number of second rotors is four according to the present invention;
Fig. 4 is a schematic structural diagram showing that the number of second rotors is four according to another form of the present invention;
Fig. 5 is a specific schematic structural diagram of movable vanes in Fig. 4 according to the present invention;
Fig. 6 is a schematic structural diagram of a two-stroke engine according to the present invention;
Fig. 7 is a schematic diagram of a four-stroke engine with a valve mechanism according to the present invention;
Fig. 8 is a schematic structural diagram of an interior of a displacement pump with fixed vanes according to the present invention;
Fig. 9 is a schematic diagram of an engine with a fixed-transmission-ratio mechanism according to the present invention;
Fig. 10 is a schematic structural diagram of an arc-shaped slider and a composite arc-shaped slider according to the present invention;
Fig. 11 is a schematic structural diagram of a pump with arc-shaped sliders according to the present invention;
Fig. 12 is a schematic structural diagram of different forms of a second rotor according to the present invention;
Fig. 13 is a schematic diagram of another overall interior structure according to the present invention;
Fig. 14 is a schematic structural diagram of a first rotor in Fig. 13 according to the present invention;
Fig. 15 is a schematic structural diagram of another second rotor according to the present invention;
Fig. 16 is a schematic diagram of cooperation of four second rotors with arc-shaped skirts according to the present invention;
Fig. 17 is a three-dimensional schematic structural diagram showing that an upper wall surface and a lower wall surface of a first rotor are respectively provided with a fluid outlet and a fluid inlet according to the present invention;
Fig. 18 is a schematic diagram of a combination of two eccentric movable vane pumps according to the present invention;
Fig. 19 is a schematic structural diagram of a first rotor provided with controlled valves according to the present invention;
Fig. 20 is a schematic structural diagram of a controlled valve according to the present invention;
Fig. 21 is a schematic structural diagram of a slide of a control mechanism cooperating with controlled valves according to the present invention;
Fig. 22 is a schematic diagram of an overall structure according to the present invention;
Fig. 23 is a schematic structural diagram showing a connection of second rotors and movable vanes according to the present invention;
Fig. 24 is a schematic structural diagram of an assembly of a first rotor and controlled valves;
Fig. 25 is a schematic structural diagram of tracks forming a control mechanism according to the present invention;
Fig. 26 is a schematic structural diagram of a variable-displacement pump with a control shaft according to the present invention; and
Fig. 27 is a schematic diagram of an overall structure as an impeller according to the present invention.

### DETAILED DESCRIPTION OF THE PREFERRED EMBODIMENTS

### Description of Reference Numerals:

Cylinder body 1; main shaft 11; bearing 12; eccentric shaft 14; support shaft 114; cylinder body cover 15; control shaft 16; isolation ring 17; isolation zone 18; clearance area 19; first rotor 2; fixed vane 20; movable vane 21; inner end 22 of a movable vane; outer end 23 of a movable vane; shaft pin 231; clearance 232; rotor shaft hole 24; tunnel 25; movable vane push rod 26; movable vane clearance 27; connecting shaft 33; arc-shaped slider rotor 34; maximum space 35; minimum space 36; second rotor 4; second rotor slide 45; composite gas passage 53; valve mechanism 55; rotor fluid inlet 58; rotor fluid outlet 59; rotor fluid passage 60; cylinder body fluid inlet 61; cylinder body fluid outlet 62; control mechanism 63; controlled valve 65; control shaft 75; track mechanism 101; cross track 102

### Embodiment 1

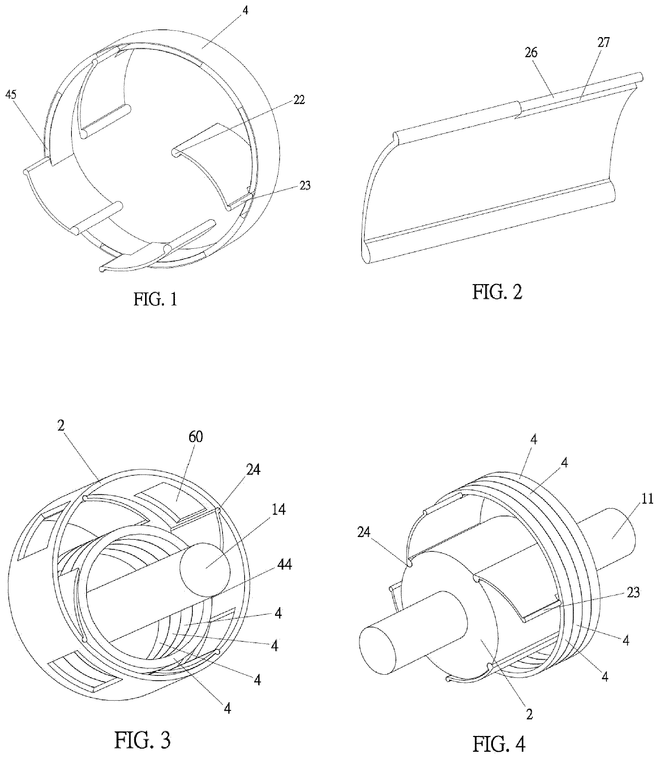

Refer to Fig. 1 and Fig. 2. Fig. 1 shows an eccentric movable vane pump with four annular groove shaped slides 45 being disposed at intervals on a second rotor 4, including: a first rotor 2 (see Fig. 4), four movable vanes 21 (see Fig. 2), and the second rotor 4. The second rotor 4 is eccentrically disposed with the first rotor 2. The second rotor 4 is coaxially disposed with a cylinder body 1. The first rotor 2 or the second rotor 4 is disposed on a main shaft. A lower portion of an outer end 23 of each movable vane 21 is in close proximity to an inner wall of the cylinder body 1; an upper portion of the outer end 23 of the movable vane 21 is provided with a push rod 26; and the push rod 26 slides in a corresponding slide 45 on the second rotor 4. A clearance 27 for the second rotor 4 remains between the push rod 26 and the movable vane 21. The outer end 23 of the movable vane corresponding to the slide 45 may be provided with an elastic device, such as a spring and an elastic sheet, so as to reduce impact and vibration caused by movement of the movable vane in the slide 45. In this embodiment, the main shaft can operate in a clockwise rotation as well as in a counterclockwise rotation, and can be applicable to a pressure pump as well as a power pump. The cylinder body 1 is provided with a fluid inlet passage 61 and a fluid outlet passage 62. When the eccentric movable vane pump rotates, radial and axial rotation speeds of the movable vanes 21 undergo periodic changes, such that a cavity displacement between adjacent movable vanes 21 undergoes a periodic change, which corresponds to an entering process and a discharging process of a working medium.

When the slides 45 that function corresponding to the push rods 26 are radial slides disposed on the second rotor 4, the push rods 26 are of flat-plate-shaped structures. With the operation of the rotor, the push rods 26 radially move in the slides 45 in a reciprocating manner. In this case, there is a plurality of first rotors 2, corresponding one-to-one to the movable vanes 21, and the second rotor 4 is disposed on the main shaft.

### Embodiment 2

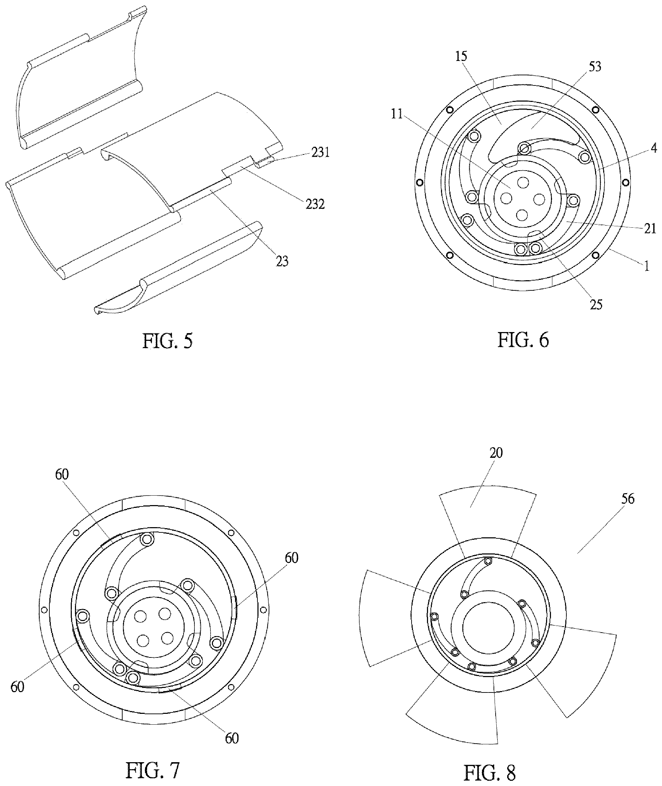

Refer to Fig. 4 and Fig. 5. Four movable vanes 21 are disposed in an eccentric movable vane pump (see Fig. 5). Inner ends 22 of the movable vanes 21 are respectively coupled to four rotor shaft holes 24 circumferentially and uniformly distributed on an outer wall of a first rotor 2. Four different second rotors 4 are axially concentrically arranged. The first rotor 2 is secured to a main shaft 11. Outer ends 23 of the movable vanes 21 are further provided with shaft pins 231, and the shaft pins 231 are coupled to rotor shaft holes 44 of the second rotors 4. Each movable vane 21 is further provided with a clearance 232 for other second rotors 4 that are not coupled to the movable vane 21. When the eccentric movable vane pump operates, parts of the outer ends 23 of the movable vanes 21 that do not correspond to the second rotors 4 are in close proximity to an inner wall of a cylinder body 1. In this embodiment, the first rotor 2 is fixedly connected to the main shaft 11. The eccentric movable vane pump can operate clockwise or counterclockwise. The cylinder body is provided with a fluid inlet 61 and a fluid outlet 62.

### Embodiment 3

Referring to Fig. 3, an eccentric movable vane pump is provided with four movable vanes 21 and four second rotors 4. Each second rotor 4 is axially concentrically disposed on an eccentric shaft 14 through a bearing. The eccentric shaft 14 is eccentrically disposed with a first rotor 2 and is fixedly disposed on the cylinder body 1. The first rotor 2 is coaxially disposed on the cylinder body 1 through a bearing. The first rotor 2 is secured to a main shaft 11. Inner ends 22 of the movable vanes 21 are respectively coupled to rotor shaft holes 24 circumferentially and uniformly distributed on the first rotor 2. Outer ends 23 of the movable vanes 21 are respectively coupled to rotor shaft holes 44 on the four second rotors 4. A wall surface of the first rotor 2 corresponding to a space between adjacent movable vanes 21 is provided with a fluid passage 60. When the fluid passage 60 rotates to a position of a fluid inlet 61 or a fluid outlet 62 on the cylinder body 1, a fluid is sucked or discharged. In this embodiment, the inner end 22 of each movable vane 21 is provided with a shaft pin 231 and a clearance 232 (see Fig. 5).

When a space between adjacent movable vanes 21 and the cylinder body 1 is compressed to a relatively small space in an operation process, an oil valve device is disposed at a corresponding position on the cylinder body 1 or a position corresponding to the first rotor 2, and an oil-gas mixture is ignited when the space is compressed to a certain extent, which is applicable to an internal combustion engine. Two identical eccentric movable vane pumps of the present invention are disposed on a same main shaft by 180° with respect to each other, so as to eliminate eccentric vibration. When being connected in series for operation, a plurality of eccentric movable vane pumps can serve as a multi-stage compression or expansion eccentric movable vane pump, and can function as a gas turbine by means of combination.

### Embodiment 4

Referring to Fig. 6, four skirts are circumferentially and uniformly distributed on a first rotor 2. The skirts are respectively provided with rotor shaft holes 24 that are respectively coupled to inner ends 22 of movable vanes 21. Outer ends 23 of the movable vanes 21 are respectively coupled to rotor shaft holes 44 disposed on a second rotor 4. Four tunnels 25 are further respectively provided on an outer wall of the first rotor 2. Two end faces of a cylinder body 1 are provided with two cylinder body covers 15. The cylinder body covers 15 are provided with composite gas passages 53. Each composite gas passage 53 is formed by a fluid inlet 61 and a fluid outlet 62. The composite gas passages 53 penetrate through the cylinder body 1. The composite gas passages 53 are located at an overlapping area of a space between two adjacent movable vanes 21 and the cylinder body 1, and the cylinder body covers 15 when the space gradually reaches a maximum volume and gradually decreases from the maximum volume. In this embodiment, when a gas in the space is gradually compressed to a minimum volume, spark plugs disposed in the tunnels 25 are ignited to fire a compressed oil-gas mixture, a high-temperature high-pressure gas being generated gradually expands to the composite gas passages 53, fresh air enters the cylinder body 1 from one of the composite gas passages 53, and the high-temperature gas in the cylinder body is discharged from the other one of the composite gas passages 53. In this way, a gas intake process of the fresh air or the oil-gas mixture, and a gas exhaust process after the combustion are completed. As the movable vanes 21 continue to rotate, the gas in the space enters a compression phase. In this embodiment, a power cycle is completed when the space between adjacent movable vanes 21 is rotated through one revolution. The eccentric movable vane pump is a two-stroke engine, and has an effect of high compression (ignition)-high expansion-efficient gas replacement.

### Embodiment 5

Refer to Fig. 7. A structure of Fig. 7 is substantially the same as the structure of Fig. 6, except that a plurality of gas passages 60 are disposed on a first rotor 2, and opening and closing of the gas passages 60 are controlled by a valve mechanism 55. When a space between adjacent movable vanes 21 is in a gas exhaust state and a gas intake state, the valve mechanism 55 opens the gas passages 60. The valve mechanism 55 may be electrically controlled, or formed by a pulley and a camshaft. In this embodiment, the eccentric movable vane pump completes a power cycle with four strokes, and is a four-stroke engine.

### Embodiment 6

Refer to Fig. 8. In Fig. 8, each of four second rotors 4 is separately provided with a fixed vane 20. With the rotation of a first rotor 2, a displacement space 56 between adjacent fixed vanes 20 undergoes a periodic change, so as to form a displacement pump by components such as the fixed vanes 20 and the pump body. The displacement pump is also applicable to fields such as internal combustion engines and compressors.

### Embodiment 7

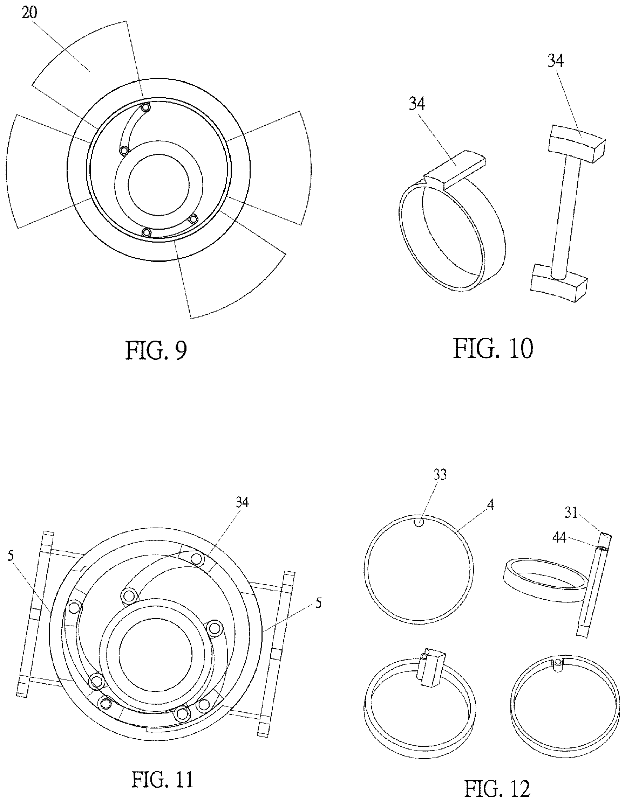

Refer to Fig. 9. Fig. 9 includes two movable vanes 21 and two corresponding second rotors 4. Each second rotor 4 is connected to two fixed vanes 20 through a fixed-transmission-ratio mechanism. Each fixed vane is provided with two symmetrical blades. A gear mechanism is set as the fixed-transmission-ratio mechanism, and a gear ratio is 1/2. During two revolutions of the second rotors, the fixed vanes 20 are rotated through one revolution. In this way, a rotation speed of each fixed vane 20 undergoes two periodic changes of quick-slow conversion during one revolution of the fixed vane 20, which corresponds to that the fixed vane 20 undergoes two compression processes and two expansion processes during one revolution of the fixed vane 20 in the pump. Four strokes of a four-stroke engine are completed during one revolution of the fixed vanes 20. As a four-stroke internal combustion engine, this embodiment can be applied as a common pump without a valve structure.

### Embodiment 8

Refer to Fig. 10 and Fig. 11. Fig. 10 shows two structural forms of a rotor, one of which is a composite structure of a complete annular rotor and an arc-shaped rotor, and the other of which is that an arc-shaped rotor is secured to an end face of a connecting shaft 33 for connecting the arc-shaped rotor and a movable vane 21. Fig. 11 is a schematic diagram of a water pump with four arc-shaped slider rotors 34 as second rotors 4. An inner arc surface and an outer arc surface of each arc-shaped slider rotor 34 slide in a slide disposed on a cylinder body 1. In this embodiment, a fluid passage 5 on the cylinder body 1 is set according to a specific position of a compressed space between adjacent vanes 21 and the cylinder body. In this embodiment, the fluid passage of the cylinder body 1 is in communication with a cylinder wall through a flange joint, and an inner wall surface of the cylinder body 1 further has a clearance passage for a fluid. In this embodiment, a rotor shaft hole 44 disposed on a second rotor 4 is replaced by the connecting shaft 33, that is, the design of using a shaft to replace a shaft hole also falls within the protection scope of the present invention.

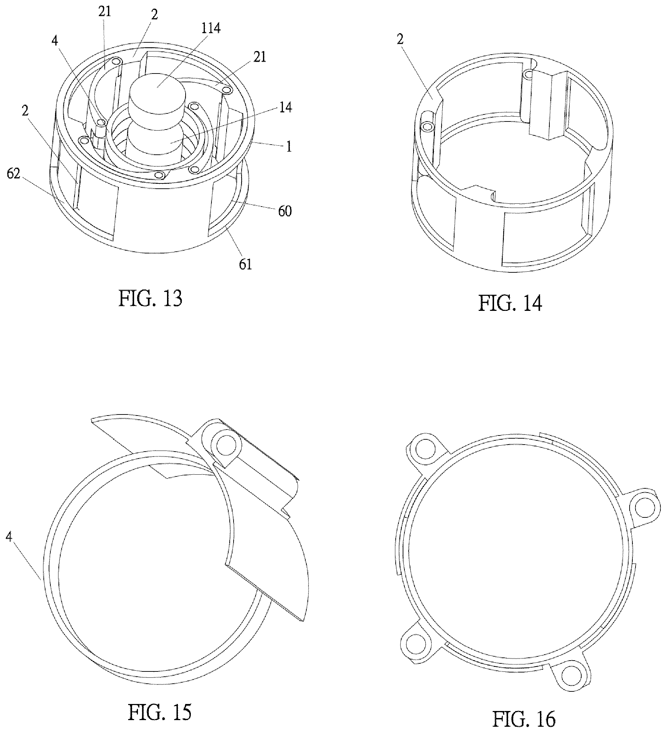

Refer to Fig. 12. Fig. 12 shows a plurality of forms of a second rotor 4, one of which is that the second rotor 4 is fixedly disposed in a plane of an end of the connecting shaft 33 for connecting the second rotor 4 and a movable vane 21, and a plurality of second rotors 4 are sequentially disposed radially concentrically in planes of other parts of the connecting shaft 33. In this manner, a relatively low cost and a relatively good sealing effect can be achieved. One form is that shaft holes 44 disposed on skirts of the second rotors 4 are coupled to movable vanes 21, and inner wall surfaces 31 of the skirts are of heights the same as heights of the movable vanes 21 and overlap outer wall surfaces of the second rotors 4. Such a structure of skirts of the rotors can achieve a higher connection strength and a better sealing effect between the rotors and the movable vanes. Additionally, Fig. 15 also discloses that a design of replacing a shaft hole disposed on a rotor with a shaft falls within the protection scope of the present invention, and multiple forms of a connection between a rotor and a movable vane are not described one by one.

A plurality of spaced controlled valves are axially distributed at a fluid passage of the cylinder body 1, so as to increase an operation pressure range of the eccentric movable vane pump of the present invention.

### Embodiment 9

Refer to Fig. 13 and Fig. 14. Fig. 13 is a schematic diagram of an eccentric movable vane pump, and Fig. 14 is a diagram of a specific structure of a first rotor 2 in Fig. 13. An upper end and a lower end of the first rotor 2 may be provided with first rotor covers that rotate with the first rotor 2 and are flush with an upper end face and a lower end face of a movable vane 21, or are provided with cylinder body covers that are flush with an upper end face and a lower end face of a movable vane 21 and are secured to the cylinder body 1. Four fluid passages 60 that are in communication with the outside and four shaft holes rotatably connected to movable vanes 21 are uniformly distributed on the first rotor 2. In Fig. 13, an eccentric shaft 14 is secured to the cylinder body 1 through a support shaft 114 coaxial with the first rotor 2, and the cylinder body 1 is secured to a frame. The eccentric shaft 14 is disposed coaxially second rotors 4 and eccentrically with the first rotor 2. The first rotor 2 is connected to a power input/output shaft, and is mounted on the frame by means of a bearing, or is mounted on the support shaft 114 by means of a bearing. The four second rotors 4 are sequentially mounted coaxially and serially on the eccentric shaft 14 by means of four bearings 4. Outer circular wall surfaces of the four second rotors 4 are respectively provided with shafts/shaft holes coupled to movable vanes 21, and the shafts/shaft holes are respectively rotatably connected to one ends of the four movable vanes 21. The other ends of the four movable vanes are respectively rotatably connected to shafts/shaft holes uniformly disposed on an inner wall of the first rotor 2. A cylinder body fluid inlet 61 and a cylinder body fluid outlet 62 disposed on the cylinder body 1 correspond to a compression area and an expansion area of a displacement space between adjacent movable vanes 21. In this embodiment, the first rotor 2 and the second rotors 4 rotate clockwise. The second rotors 4 are eccentrically disposed with the first rotor 2. Therefore, when the first rotor 2 rotates, rotation speeds of ends of the movable vanes 21 rotatably connected to the second rotors 4 are enabled to undergo periodic changes, and radial positions with respect to an axis, that is, a center of the first rotor 2, undergo periodic changes, such that a displacement space between adjacent movable vanes 21 also undergoes a periodic change, so as to form a displacement pump.

In Fig. 13, for example, two control mechanisms 63 are provided, and when rotating, the two control mechanisms 63 respectively adjust widths and positions of the cylinder body fluid inlet 61 and the cylinder body fluid outlet 62, so as to adjust the amount of a working fluid during one revolution of the eccentric movable vane pump.

In the present invention, a rotatable connection manner between the movable vanes 21 and the first rotor 2 and between the movable vanes 21 and the second rotors 4 may be a shaft hole-type rigid connection manner, or may be a flexible connection manner by using a soft material or an elastic material for connection portions.

### Embodiment 10

Refer to Fig. 15 and Fig. 16. Fig. 15 shows that an arc-shaped skirt is further provided on a second rotor 4, and the arc-shaped skirt can improve the connection strength and sealing effect between the second rotor 4 and a corresponding movable vane 21. Fig. 16 is a schematic plan view of cooperation of four second rotors 4 with arc-shaped skirts in FIG. 15. Upper and lower end faces of the arc-shaped skirts are flush with cylinder body covers or first rotor covers, such that a working fluid cannot flow into end face contact clearances generated from serial connection of a plurality of second rotors 4, and bearings and a coolant or lubricating oil inside the second rotors 4 can be protected. As described in Fig. 4, adjacent arc-shaped skirts are nested with each other, so as to separate all the outer spaces from inner spaces, and when an elastic sealing body is used, a good sealing effect can be achieved.

### Embodiment 11

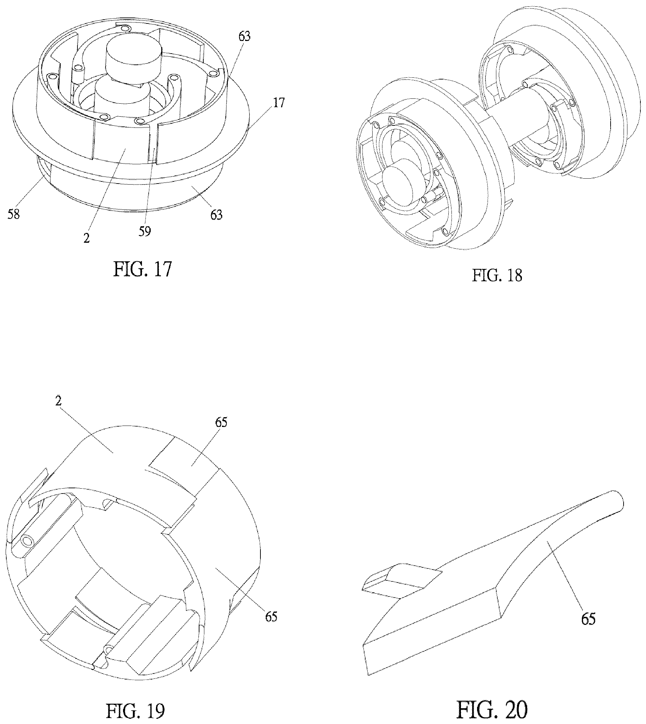

Refer to Fig. 17. Fig. 17 is a three-dimensional schematic structural diagram showing that an upper wall surface and a lower wall surface of a first rotor 2 are respectively provided with a rotor fluid outlet 59 and a rotor fluid inlet 58. An isolation ring 17 is further disposed between the rotor fluid outlet 59 and the rotor fluid inlet 58, and the isolation ring 17 is disposed on a cylinder body 1. When rotating, two control mechanisms 63 can respectively adjust widths and positions of a cylinder body fluid inlet 58 and a cylinder body fluid outlet 59, so as to adjust the amount of a working fluid during one revolution of an eccentric movable vane pump. Advantages of this embodiment are that: the cylinder body fluid inlet 61 and the fluid outlet 62 are respectively disposed at the upper portion and the lower portion of the cylinder body by means of the isolation ring 17, so as to increase travels of a high-pressure area and a low-pressure area, and obtain a better isolation and sealing effect of the fluid inlet and the fluid outlet.

### Embodiment 12

Refer to Fig. 18. Fig. 18 shows a combination of two eccentric movable vane pumps, where one eccentric movable vane pump is a pressurization pump for increasing a pressure of a low-pressure fluid entering the eccentric movable vane pump and subsequently discharging the pressurized fluid, and the other eccentric movable vane pump is a depressurization pump for decreasing a pressure of a high-pressure fluid entering the eccentric movable vane pump and subsequently discharging the depressurized fluid. When the fluid is a gas, a first rotor and an eccentric shaft of the pressurization pump are fixedly connected, and a first rotor and an eccentric shaft of the depressurization pump are fixedly connected, and the combination of the two pumps may be used as a turbocharger, a gas turbine, an internal combustion engine, and the like. When the fluid is a liquid, a volume of the fluid entering the pressurization pump and a volume of the fluid entering the depressurization pump can be adjusted by means of a control mechanism, and the combination of the two pumps may be used as a stepless hydraulic coupler and the like.

### Embodiment 13

Refer to Fig. 19. Fig. 19 is similar to Fig. 17, except that rotatable controlled valves 65 located at a first rotor 2 are disposed on a rotor fluid inlet 58 and a rotor fluid outlet 59. As shown in Fig. 19, in case of a pressurization pump, the controlled valve 65 on the rotor fluid inlet 58 rotates inward when an inner side of the first rotor 2 is of a negative pressure, and the controlled valve 65 on the rotor fluid outlet 59 rotates outward when the inner side of the first rotor 2 is of a positive pressure. In case of a depressurization pump, when a displacement space corresponding to the controlled valve 65 gradually increases from a minimum volume, the controlled valve on the rotor fluid inlet 58 is controlled by a control mechanism 63 to rotate outward; and when a pressure of the inner side of the first rotor 2 is close to a pressure of a low-pressure end of the depressurization pump, the controlled valve on the rotor fluid outlet 59 is controlled by the control mechanism 63 to rotate inward. The controlled valves 65 are controlled by one of a fluid pressure difference, a centrifugal force, a power, a magnetic force, and an elastic force, or a resultant force of at least two of the forgoing forces.

### Embodiment 14

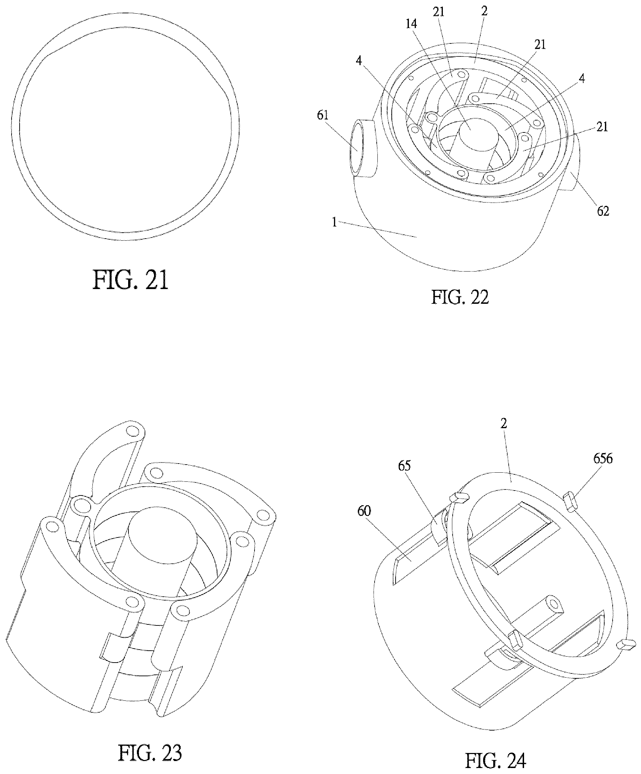

Refer to Fig. 20 and Fig. 21. Fig. 20 is a schematic structural diagram showing that controlled valves 65 are controlled by a control mechanism 63 by means of a cam in the embodiment 5. With this structure, the controlled valves 65 can be controlled by a position control mechanism to rotate. Fig 21 is a schematic diagram of the position control mechanism that cooperates with the controlled valves 65. When a curve of a slide of the control mechanism 63 is changed, opening and closing positions of the controlled valves 65 can be changed, so as to adjust an actual volume of a working fluid.

The controlled valves 65 may be opened and closed by means of radial sliding. Each of the controlled valves 65 may be further provided with an elastic compensation device, such that actual operation of the controlled valve 65 is not affected when wear and tear of a sliding friction part occurs. The control mechanism may control the controlled valves 65 by means of an electromagnetic force. In this embodiment, in particular, when a depressurization pump uses the controlled valves 65, leakage losses and seal friction losses of a high-pressure end and a low-pressure end can be substantially reduced, and processing precision of parts is substantially reduced. When a fluid is a gas, squeak and surge can be avoided. When a pressurization pump and a depressurization pump form an internal combustion engine, less exhaust emission and higher oil combustion efficiency can be achieved, in combination with combustion chamber oil-gas control technologies, combustion technologies including on-duty flame, exhaust gas catalyzing and purification technologies, manifold oxygen enriched catalyzing technologies, and the like.

### Embodiment 15

Refer to Fig. 22. Fig. 22 is substantially the same as Fig. 13, and is a schematic structural diagram showing that a cylinder body 1 and cylinder body fluid passages are added. Fig. 23 is a schematic structural diagram of assembly of second rotors 4 and movable vanes in Fig. 22. Refer to Fig. 24. Fig. 24 is a schematic structural diagram of a first rotor 2 and valves 65 with cam followers. A cam follower 656 is disposed on each valve 65. Four rotor fluid passages 60 are uniformly distributed on the first rotor 2. One valve 65 is disposed corresponding to each rotor fluid passage 60. The valve 65 is controlled by a cam mechanism 655. In this embodiment, the cam mechanism 655 is formed by a cam follower 656 and a cam 657, and the cam follower 656 opens or closes the valve 65 with a change of an acting face of the cam 657.

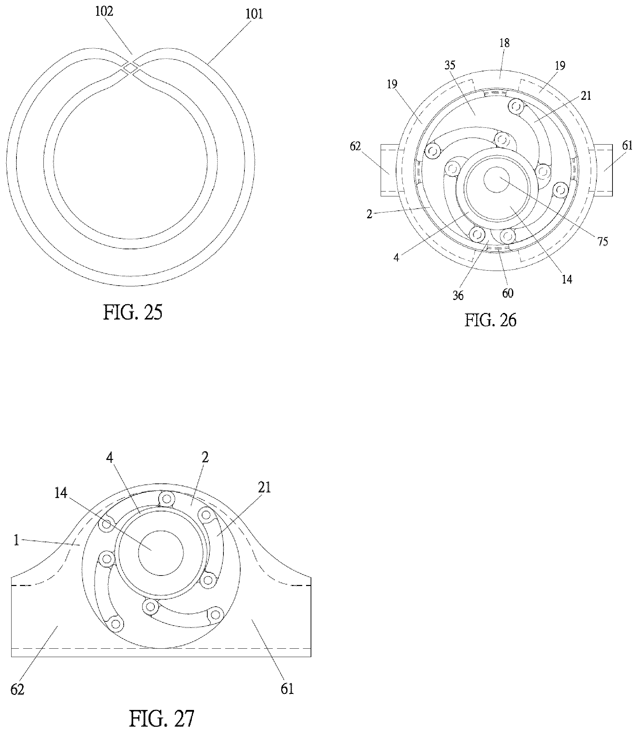

Fig. 25 is a schematic structural diagram of a track mechanism 101. The track mechanism 101 has two tracks with different diameters. The two tracks with different diameters are connected by means of a cross track 102 to form a closed loop, that is, a rotor or a slider that works with the track mechanism 101 and controls the opening or closing of a valve 65 is located at one track, and can only enter the other track after passing the cross track 102, which corresponds to an action of changing from an opened state to a closed state of the valve 65 or an action of changing from a closed state to an opened state of the valve 65. The cross track 102 may be further provided with a mechanism such as a guide groove, a guide path, or an elastic mechanism, so as to assist to limit a track changing action of the slider or the rotor on the track mechanism 101. When the slider or the rotor is located at one track of the track mechanism 101, the state corresponds to an opened state of the controlled valve 65; when the slider or the rotor is located at the other track of the track mechanism 101, the state corresponds to a closed state of the valve 65; and when the slider or the rotor is located at the cross track 102, the state corresponds to a state of changing from an opened state to a closed state or changing from a closed state to an opened state. This embodiment is used as a four-stroke engine. The two tracks in the track mechanism 101 enable the opened state and the closed state of the controlled valve 65 to correspond to a compression state and an expansion state of the engine.

The track mechanism 101 is provided with a rotation mechanism 111. The rotation mechanism 111 can rotate the track mechanism 101. When the rotation mechanism 111 acts, a relative positional relationship among the track mechanism 101, the first rotor 2, and each of the valves 65 changes, which corresponds to changes of a starting/ending position of an opened state and a starting/ending position of a closed state of the valve 65, so as to change a gas intake amount, a compression ratio, and an expansion ratio.

### Embodiment 16

Refer to Fig. 26. Fig. 26 is a schematic structural diagram of a variable-displacement pump added with a control shaft 75. In Fig. 26, an isolation zone 18 isolates a high-pressure area from a low-pressure area of a cylinder body. A clearance area 19 is in communication with a corresponding one of a cylinder body fluid inlet 61 or a cylinder body fluid outlet 62. The control shaft 75 is eccentrically disposed with both an eccentric shaft 14 and a first rotor 2, rotatably disposed on the cylinder body 1, and is controlled by a control mechanism to rotate. The control mechanism may be a stepper motor control mechanism, a control mechanism of a stepper motor, a lead screw and a connecting rod, or other control mechanisms. A distance between axes of the eccentric shaft 14 and the first rotor 2 changes with the rotation of the control shaft 75, and consequently, a difference between a maximum space 25 and a minimum space 26 of a space between adjacent movable vanes changes, so as to change an actual volume of a working fluid during one revolution of the variable-displacement pump. In this embodiment, an adjustment mechanism of the control shaft 75 may be further added, so as to change a position of the control shaft 75, thereby achieving a better operation effect of an eccentric movable vane pump. This embodiment can be used as a stepless hydraulic coupler or a stepless hydraulic transmission.

### Embodiment 17

Refer to Fig. 27. Fig. 27 is a schematic structural diagram of an eccentric movable vane pump of the present invention as an impeller. In the figure, a first rotor 2 is disposed on a cylinder body 1; second rotors 4 are disposed on an eccentric shaft 14; movable vanes 21, the first rotor, and the second rotors rotate clockwise; a fluid inlet 61 is located at an area of the cylinder body 1 corresponding to a state that a space between adjacent movable vanes 21 is in an expanded state and a volume of the space is relatively large; and a corresponding fluid outlet 62 is located at an area of the cylinder body 1 corresponding to a state that a space between adjacent movable vanes 21 is in a compressed state and a volume of the space is relatively large. In this embodiment, a fluid passage 60 of the first rotor 2 is maximized, the first rotor 2 includes an upper circular sheet-shaped structure and a lower circular sheet-shaped structure, and no annular structure body is disposed at the middle of the first rotor 2. In this embodiment, when the impeller is in an operating state, a degree of coincidence between a flow direction of a fluid and a direction of action of the movable vanes 21 that generate thrust is high, and the fluid encounters an extremely small head resistance in a process of flowing through the impeller, such that an impeller with a high efficiency and multiple operation conditions is obtained. The impeller can be applied to facilities such as an aircraft, a marine vessel, and a submarine. Alternatively, the structure of this embodiment may be used as a wind engine or a hydraulic engine.

## Claims

1. An eccentric movable vane pump, comprising: a cylinder body (1), a first rotor (2), second rotors (4), and movable vanes (21), wherein the first rotor (2) is eccentrically disposed with the second rotors (4); one end of each of the movable vanes (21) is rotatably connected to the first rotor (2); the second rotors (4) correspond one-to-one to the movable vanes (21), and the number of the second rotors (4) and the number of the movable vanes (21) are greater than or equal to two; the other ends of the movable vanes (21) are rotatably connected to the second rotors (4); the first rotor (2) is disposed on a main shaft (11); and the cylinder body (1) is provided with a fluid inlet (61) and a fluid outlet (62) respectively corresponding to an expansion area and a compression area of a space between adjacent movable vanes (21).

2. The eccentric movable vane pump according to claim 1, wherein the second rotors (4) are respectively provided with fixed vanes (20), and a volume of a space between adjacent fixed vanes (20) is periodically compressed and expanded, such that the fixed vanes (20) and components of the cylinder body (1) form a displacement pump.

3. The eccentric movable vane pump according to claim 2, wherein each fixed vane (20) and the corresponding connected second rotor (4) are connected by means of a fixed-transmission-ratio mechanism, so as to change from a state that a rotation speed of the fixed vane (20) undergoes one change of quick-slow conversion during one revolution of the fixed vane (20) to a state that the fixed vane (20) undergoes a plurality of periodic changes of quick-slow conversion during one revolution of the fixed vane (20), such that the fixed vane (20) undergoes a plurality of compression and expansion processes during one revolution of the fixed vane (20) in the cylinder body, and the fixed vane (20) completes a power cycle of a gas with four strokes during one revolution of the fixed vane (20).

4. The eccentric movable vane pump according to claim 1, wherein in a rotation operation process of a space between adjacent movable vanes (21) and the cylinder body (1), and in a process that the space gets close to a maximum volume and gradually decreases from the maximum volume, a composite gas passage (53) is disposed on the cylinder body (1) corresponding to the space, and the composite gas passage (53) is formed by the fluid outlet (62) and the fluid inlet (61), which is applicable to a two-stroke engine.

5. The eccentric movable vane pump according to claim 1 or 2, wherein in a rotation process of a space between adjacent movable vanes (21), a valve mechanism (55) is disposed on the cylinder body (1) corresponding to a volume expansion area and a volume compression area of the space, and the valve mechanism is closed when a gas in the space is compressed and expanded and is opened when the space sucks a gas and discharges a gas, which is applicable to a four-stroke engine.

6. The eccentric movable vane pump according to claim 1, wherein a rotatable connection manner between the movable vanes (21) and the first rotor (2) and between the movable vanes (21) and the second rotors (4) is a shaft hole-type connection manner or a flexible connection manner.

7. The eccentric movable vane pump according to claim 1, wherein the first rotor (2) is provided with a rotor fluid inlet (58) and a rotor fluid outlet (59) respectively corresponding to an upper portion and a lower portion of an annular wall surface between adjacent movable vanes (21); the cylinder body fluid inlet (61) and the cylinder body fluid outlet (62) are disposed at an upper portion and a lower portion of the cylinder body (1) corresponding to the rotor fluid inlet (58) and the rotor fluid outlet (59); and when the rotor fluid inlet (58) and the cylinder body fluid inlet (61) are in communication with each other or the rotor fluid outlet (59) and the cylinder body fluid outlet (62) are in communication with each other, a fluid enters or is discharged from the displacement space (56) between the adjacent movable vanes (21).

8. The eccentric movable vane pump according to claim 9, wherein the rotor fluid inlet (58) and the rotor fluid outlet (59) are provided with controlled valves (65), and the controlled valves (65) are controlled by one of a fluid pressure difference, a centrifugal force, a power, a magnetic force, and an elastic force, or a resultant force of at least two of the forgoing forces.

9. The eccentric movable vane pump according to claim 9, wherein a low-pressure fluid enters the displacement space (56) through the cylinder body fluid inlet (61), and the low-pressure fluid is pressurized in the displacement space (56) and is subsequently discharged through the cylinder body fluid outlet (62), such that a pressurization pump is formed; a high-pressure fluid enters the displacement space (56) through the cylinder body fluid inlet (61), and the high-pressure fluid releases the pressure in the displacement space (56) and is subsequently discharged through the cylinder body fluid outlet (62), such that a depressurization pump is formed; or a low-pressure fluid enters the displacement space (56) through the rotor fluid inlet (58), and the low-pressure fluid is pressurized in the displacement space (56) and is subsequently discharged through the rotor fluid outlet (59), such that a pressurization pump is formed; and a high-pressure fluid enters the displacement space (56) through the rotor fluid inlet (58), and the high-pressure fluid releases the pressure in the displacement space (56) and is subsequently discharged through the rotor fluid outlet (59), such that a depressurization pump is formed.

10. The eccentric movable vane pump according to claim 1 or 10, wherein the cylinder body (1) is further provided with a control mechanism (63), and the control mechanism (63) changes a positional relationship between the cylinder body fluid inlet (61) and the cylinder body fluid outlet (62) and thus adjusts shapes and sizes of the cylinder body fluid inlet (61) and the cylinder body fluid outlet (62); or the control mechanism (63) can change opening and closing conditions of each of the controlled valves (65), for example, starting positions for opening and closing the controlled valve, so as to change a volume of a fluid entering the displacement space (56) or discharged from the displacement space (56) during one revolution of the eccentric movable vane pump.

11. The eccentric movable vane pump according to claim 11 or 12, wherein when the working fluid is a liquid, two eccentric movable vane pumps are provided, one of which is a pressurization pump and the other is a depressurization pump, the fluid sequentially flows through the pressurization pump and the depressurization pump, and the control mechanism (63) functions to change volumes of the fluid entering the pressurization pump and the depressurization pump during one revolution of the pressurization pump and the depressurization pump, so as to change a speed difference between the pressurization pump and the depressurization pump, and therefore, the structure can be used as a hydraulic torque converter or a continuously variable transmission; and when the fluid is a gas, one pressurization pump, one depressurization pump, and a heat exchange chamber are provided, the pressurization pump and the depressurization pump are coaxially and fixedly connected, the fluid sequentially flows through the pressurization pump, the heat exchange chamber, and the depressurization pump, and therefore, the structure can be used as a turbocharger, an internal combustion engine, a gas turbine, or an external combustion engine.

12. The eccentric movable vane pump according to claim 1, wherein the second rotors (4) are coaxially disposed on an eccentric shaft (14).

13. The eccentric movable vane pump according to claim 21, wherein a position of the eccentric shaft (14) on the cylinder body (1) is controlled by an eccentric shaft control mechanism (141), and the eccentric shaft control mechanism (141) can change the position of the eccentric shaft (14) on the cylinder body (1), so as to change an eccentricity between the first rotor (2) and each of the second rotors (4).

14. The eccentric movable vane pump according to claim 1, wherein the eccentric movable vane pump forms an impeller.

15. An eccentric movable vane pump, comprising: a cylinder body (1), a first rotor (2), second rotors (4), and movable vanes (21), wherein the first rotor (2) is eccentrically disposed with the second rotors (4); one end of each of the movable vanes (21) is rotatably connected to the first rotor (2); the other end of each of the movable vanes (21) is provided with a push rod (26), and the push rods (26) slide in slides (45) disposed on the second rotors (4); the number of the removable vanes is greater than or equal to two; and the cylinder body (1) is provided with a fluid inlet (61) and a fluid outlet (62) respectively corresponding to an expansion area and a compression area of a space between adjacent movable vanes (21).
